# EUROPÄISCHE PATENTSCHRIFT

(11) **EP 0 679 929 B1**
(45) Veröffentlichungstag und Bekanntmachung des Hinweises auf die Patenterteilung: **15.11.2000**
(21) Anmeldenummer: 95105767.8
(22) Anmeldetag: 18.04.1995
(51) Int. Cl.: G03B 19/04

(54) **Fotografischer Rollfilmpack mit einer Aufnahmelinse**
Photographic roll film package with an objective lens
Emballage de film photographique avec une lentille d'objectif

(30) Priorität: 28.04.1994 DE 4414854
(43) Veröffentlichungstag der Anmeldung: 02.11.1995
(73) Patentinhaber: AGFA-GEVAERT N.V., 2640 Mortsel (BE)
(72) Erfinder: Lermann, Peter, Dr., D-83629 Weyern-Nahring 106 1/2 (DE); Engelsmann, Dieter, D-82008 Unterhaching (DE)

(56) Entgegenhaltungen:
- EP-A- 0 465 897
- DE-A- 3 721 556
- DE-A- 4 222 356
- FR-A- 2 334 127
- GB-A- 2 235 984
- US-A- 4 882 600

## Beschreibung

Die Erfindung betrifft einen fotografischen Rollfilmpack nach dem Oberbegriff des Anspruchs 1.

Fotografische Filmpacks ähnlicher Art sind bereits in verschiedenen Varianten bekannt, beispielsweise durch im Handel befindliche Packs oder durch die DE-OS 3 716 812, DE-OS 3 721 556, DE-OS 3 733 403, GB 2 235 984, EP-A 0 465 897 oder die US-PS 4 882 600. Dabei besteht eine äußere Umhüllung gewöhnlich aus bedrucktem Karton und kann unter Umständen auch eine Sucherlinse enthalten oder sie ist wasserundurchlässig aus durchsichtigem Kunststoff ausgebildet, so daß der Filmpack auch als Unterwasserkamera benutzbar ist. Bei dem letztgenannten Typ muß die Wasserdichtigkeit unbedingt gewährleistet sein.

Nun werden Filmpacks der eingangs genannten Art vor allem in Ausflugsgebieten am Meer, im Sand, bei Festen und Pickniks im Grünen, beim Sport und ähnlichen Gelegenheiten benutzt, wo sie an Ort und Stelle an Verkaufsständen angeboten werden und man eine eigene, wertvolle Kamera nicht mitgenommen hat, sei es wegen des größeren Gewichts, sei es, weil man sie vergessen hat, oder sei es, weil man Diebstahl oder Beschädigungen durch Feuchtigkeit, Wellen, Sand oder spielende Kinder, die sie mit Schokolade, Eis und anderem beschmieren könnten, befürchtet. Die Filme in bekannten Unterwasser-Filmpacks sind zwar gegen Wasser, Sand und Beschmieren durch Kleinkinder geschützt, dafür ist aber der Aufwand wegen der vollständigen Wasserdichtigkeit größer, als für den normalen Gebrauch erforderlich. Die anderen bekannten Filmpacks mit Pappkarton-Umhüllungen dagegen sind gegen Sand, Spritzwasser und Verschmieren überhaupt nicht geschützt. Außerdem ist es leicht möglich, die das Kerngehäuse großenteils freilassende Pappkarton-Umhüllung einfach, z.B. durch spielende Kinder, aufzureißen, was gewöhnlich zur Funktionsunfähigkeit des ganzen Filmpacks führt.

Dadurch kann das Kerngehäuse häufig nach der Filmentnahme vom Hersteller nicht wieder benutzt werden.

Der Erfindung liegt daher die Aufgabe zugrunde, einen Filmpack der eingangs genannten Art, ohne Wasserdichtigkeit zu erzielen, auf einfache Weise so auszugestalten, daß ihm äußere Einwirkungen, wie Sand, Spritzwasser, spielende Kinder oder Schmutzeinwirkungen, nichts anhaben können und ein mechanisches Zerstören ohne größere Gewaltanwendung kaum möglich ist, er aber trotzdem von der den belichteten Rollfilm weiterverarbeitenden Stelle problemlos zu öffnen und neu zu konfektionieren ist.

Diese Aufgabe wird erfindungsgemäß durch die Merkmale des Hauptanspruchs gelöst. Weitere vorteilhafte Merkmale der Erfindung sind den Unteransprüchen entnehmbar.

Die starren Kunststoffschalen der Umhüllung geben dem Benutzer das Gefühl einer stabilen Kamera. Der zwar biegsame und elastische, aber doch stabile Streifen wird nicht als leicht abreißbare Verbindung der beiden Schalen empfunden, insbesondere wenn er über die Schalenflächen übersteht und Bedienungselemente, wie den Auslöser, enthält, sondern als fester Bestandteil des Filmpacks, sodaß auch Kinder kaum in Versuchung kommen, ihn abreißen zu wollen. Der eigentliche Filmpack samt beweglichen Funktionselementen aber liegt innerhalb der Umhüllung geschützt, sodaß bei Spiel, Sport oder Picknik mögliche Einwirkungen und Verschmutzungen keinen Einfluß auf ihn haben können. Hierdurch ist sichergestellt, daß das Kerngehäuse vom Hersteller neu mit Film konfektioniert werden und gegebenenfalls in ein neues oder auch ein gebrauchtes Schutzgehäuse verpackt werden kann. Dabei sind Material, Herstellung, Montage und Wiederverwendbarkeit so günstig, daß sie die Wirtschaftlichkeit des Filmpacks nicht nur nicht beeinträchtigen, sondern erhöhen.

Die Erfindung wird anhand von Zeichnungen näher erläutert, wobei auch auf besondere Vorteile einzelner Merkmale besonders hingewiesen wird.

Es zeigen
- Fig. 1: einen Schnitt durch eine Ausführungsform eines erfindungsgemäßen Rollfilmpacks mit Schutzgehäuse,
- Fig. 2: eine Draufsicht auf den Rollfilmpack nach Fig. 1 bei aufgebrochener Auslösermarkierung und teilweise aufgebrochenem Verbindungsstreifen,
- Fig. 3: die Draufsicht nach Fig. 2 bei entfernter Auslösermarkierung und über dem Auslöser aufgebrochenem Verbindungsstreifen,
- Fig. 4: einen Schnitt durch Fig. 2 gemäß der Schnittlinie IV-IV,
- Fig. 5: einen vergrößerten Schnitt durch den Gehäusedurchtritt der Filmtransporthandhabe gemäß der Schnittlinie V-V der Fig. 3,
- Fig. 6: eine Ansicht des Filmpacks nach Fig. 1 in Richtung auf das Aufnahmeobjektiv,
- Fig. 7 und 8: vergrößerte Darstellungen von Rast- oder Fixieranordnungen für die Schalen des Schutz- und Kerngehäuses,
- Fig. 9: eine abgebrochene Darstellung einer anderen Ausführungsform eines Schutzgehäuses.

In den Figuren sind ein lichtdichtes, nachfolgend als Kerngehäuse bezeichnetes Gehäuse mit 1 und 2, ein Filmvorrats- oder Patronenraum mit 3, ein Filmaufwickelraum mit 4, ein Bildschacht, der den entsprechend dem vorgesehenen Filmformat notwendigen Bildwinkel bzw. Strahlengang zwischen einem Aufnahmeobjektiv 5, 6 und der Filmbahn 1a, 2a begrenzt, mit 1b und ein Kameraverschluß unmittelbar hinter der inneren Objektivlinse 5 mit 7 bezeichnet. Der unbelichtete Film, welcher nicht gezeigt ist, kann in einer Patrone oder als loser Filmwickel in den Filmvorratsraum 3 eingesetzt, über die Filmbahn 1a geführt und an einer nicht gezeigten, mit einer drehbaren Filmtransporthandhabe 8 verbundenen Aufwickelspule befestigt sein. Das Kerngehäuse 1, 2 mit Film wird vom Hersteller konfektioniert, der Film nach der Belichtung wieder vom Hersteller dem Kerngehäuse entnommen. Dieses kann dann erneut mit Film bestückt werden. Dementsprechend weist das Kerngehäuse alle für fotografische Aufnahmen notwendigen Bestandteile einer Kamera in irgendeiner bekannten und nicht gezeigten Form auf wie Verschlußauslöser, Bildzählwerk, eine Filmstoppeinrichtung, durch die der Film beim Drehen der Filmtransporthandhabe um einen Bildschritt angehalten wird, gegebenenfalls auch ein elektronisches Blitzgerät mit seinen funktionsnotwendigen Teilen, wie die Ladehandhabe 9. Einige dieser Teile können auch außerhalb des Kerngehäuses 1, 2 angeordnet sein. Bei dem gezeigten Ausführungsbeispiel ist das Kerngehäuse in einen vorderen Hauptteil 1 und eine abnehmbare Rückwand 2 mit gewölbter rückwärtiger Filmbahn 2a aufgeteilt. Es sind aber auch alle anderen bekannten Gehäuseanordnungen möglich, z.B. die Aufteilung in ein geschlossenes Gehäuse mit abnehmbarem Unterteil.

Bei bekannten Rollfilmpacks dieser Art ist nun das Kerngehäuse teilweise mit einer bedruckten Pappverkleidung umgeben, die die Betätigungshandhaben freiläßt. Diese Verkaufspackungen sind in keiner Weise gegen Beschädigungen geschützt. So sind sie Umwelteinflüssen, wie Nebel, Regen oder Gischt von Brandungen und ähnlichem ausgesetzt. Ebenso können die Pappverkleidungen z.B. von Kindern aufgerissen werden, wodurch der ganze Filmpack dann unbrauchbar wird, wenn in der Pappverkleidung Funktionsteile, wie Sucherausschnitte oder Linsen enthalten sind. Während bei wertvollen Kameras darauf geachtet wird, daß sie nicht unsachgemäß behandelt werden, ist dies gerade bei den an Verkaufsständen in Ausflugsgebieten erhältlichen Filmpacks nicht der Fall.

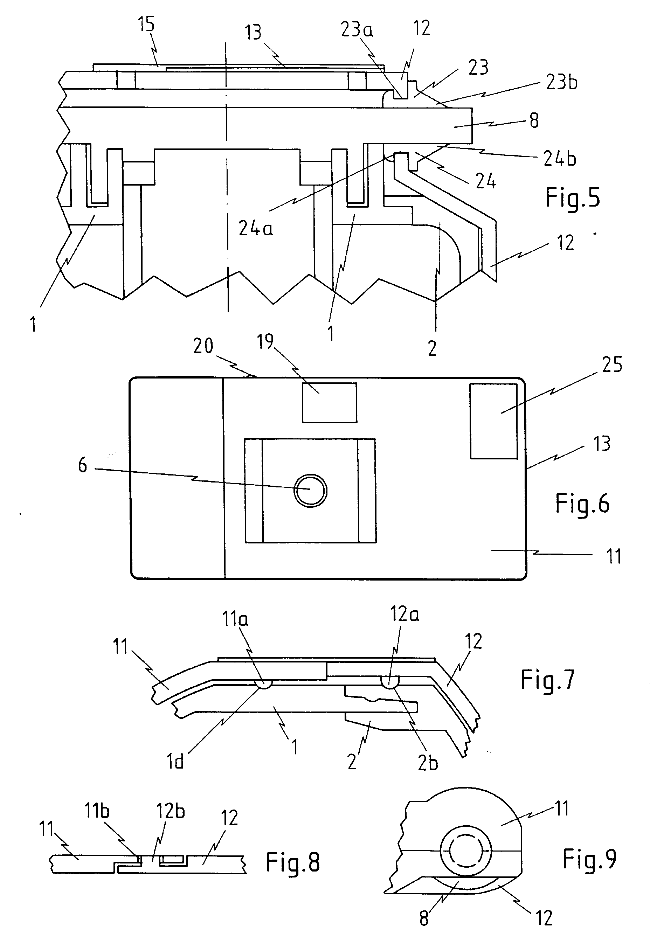

Demgegenüber wird der erfindungsgemäße Rollfilmpack, ohne deshalb für Unterwasseraufnahmen geeignet zu sein, gegen alle eben beschriebenen Beschädigungen dadurch geschützt, daß das Kerngehäuse 1, 2 durch ein Schutzgehäuse aus Schalen 11, 12 aus durchsichtigem, im wesentlichen starren Kunststoff umgeben wird. Die beiden Schalen 11, 12 können miteinander und/oder auf dem Kerngehäuse 1, 2 durch druckknopfähnliche oder hakenartige Rasten 11a, 12a bzw. 11b. 12b, wie sie nur beispielsweise in den Fig. 7 und 8 gezeigt sind, verrastet sein, aneinander fixiert oder auch befestigt werden. Sie könnten aber auch verschweißt oder verklebt sein, wobei die Naht beim Öffnen des Filmpacks aufgeschnitten werden müßte.

Als besonders günstig erweist sich eine nur leichte Fixierung, wobei der eigentliche Zusammenhalt der Schalen 11, 12 durch einen über benachbarten Schalenkanten angeordneten Streifen 13 aus biegsamem, elastischem Kunststoff bewirkt wird. Dabei ist es bezüglich des Schutzes des Filmpacks gegen Beschädigungen und Verschmutzungen zweckmäßig, daß der Streifen 13 mindestens über einer, sinnvollerweise aber über allen durch Druck bedienbaren Betätigungshandhaben, wie Verschlußauslöser 14 und Ladehandhabe 9, liegt und letztere durch Drücken auf den Streifen 13 an hierfür eigens durch Aufkleber (vorteilhafterweise aus Kunststoff) 15, 16 markierten Stellen betätigbar sind. Es ist aber auch möglich, auf die Aufkleber zu verzichten, wenn der Streifen 13 aus durchsichtigem, gegebenenfalls an anderen Stellen bedrucktem Kunststoff besteht und die Betätigungshandhaben auffallend gefärbt und durch den Streifen 13 hindurch gut erkennbar sind. Bei aufgeliebten Markierungen 15, 16 ist es aus Gründen der Sicherheit und eines guten Aussehens angebracht, die offenen Enden des Streifens 13 unterhalb einer der aufgesetzten Markierungen 15, 16 aneinanderstoßen zu lassen und zu verlieben oder zu verschweißen, wobei die Markierungen 15, 16 wenigstens die Breite des Streifens 13 haben sollte. Eine weitere, nicht gezeigte, weil leicht vorstellbare Ausführungsform des Streifens 13 könnte darin bestehen, daß der elastische, biegsame, flache Streifen als endloses, gummibandähnliches Teil ausgebildet ist und unter vorübergehender Aufweitung über die Schalen 11, 12 gezogen wird und über den Schalenkanten aufgrund seiner Elastizität unter Spannung aufliegt und sie zusammenhält. Natürlich ist es bei allen Ausgestaltungen mit einem elastischen Streifen möglich, diesen mit den Schalen zu verkleben, oder in ähnlicher Weise, wie die Schalen miteinander oder mit dem Kerngehäuse verrastet sein können, zu befestigen.

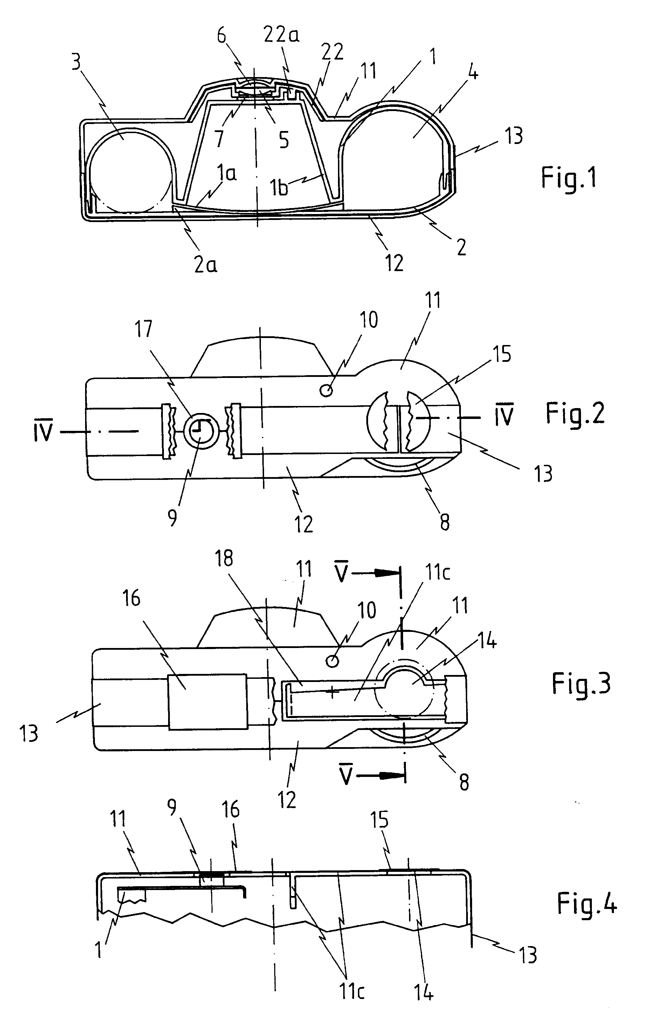

Bei dem gezeigten Ausführungsbeispiel nach den Fig. 1 bis 4 bilden beide Schalen 11, 12 gegebenenfalls zusammen Ausnehmungen 17, 18 an den Stellen, an denen eine Betätigungshandhabe bedienbar sein muß. Dabei ragt die Ladehandhabe 9 durch die Ausnehmung 17 und liegt so unmittelbar unter dem Streifen 13. Für die Betätigung des nicht sichtbaren Verschlußauslösers am Kerngehäuse 1 ist dagegen in der Ausnehmung 18 ein federnder Auslösearm 11c mit der Auslöserfläche 14 an die Schale 11 angeformt, wobei die Auslöserfläche 14 unter dem Aufkleber 15 liegt und durch Drücken auf den Auflieber 15 und damit den Streifen 13 über den federnden Auslösearm 11c der Auslöser am Kerngehäuse 1 betätigt wird. Danach federt der Auslösearm 11c wieder zurück und gibt den Auslöser am Kerngehäuse wieder frei.

Um eine einfache Montage des Filmpacks nach Konfektionierung, und zwar möglichst eine automatische Montage, zu erreichen, weist wenigstens eine der Schalen 11, 12 des Schutzgehäuses an wenigstens einer einem optischen Strahlengang des Kerngehäuses 1, 2 zugeordneten Stelle eine optisch wirksame Ausgestaltung auf. Diese optisch wirksame Ausgestaltung kann ein Objektivlinsenteil 6, eine Sucherlinse 19, eine Lupe 20 für die Bildzahlanzeige 10 oder eine Streuscheibe 25 für ein eingebautes, nicht gezeigtes elektronisches Blitzgerät sein. Zweckmäßigerweise sind alle optisch wirksamen Teile, die von ihrer Lage her in einer der Schalen 11, 12 angeordnet werden können, auch dort eingeformt. Das Objektivlinsenteil 6 z.B. kann ein in die Schale 11 eingeformter Meniskus sein, der zusammen mit einem am Kerngehäuse 1 gelagerten weiteren Meniskus 5 das Aufnahmeobjektiv bildet. Dabei ist die weitere Linse 5 an einem am Kerngehäuse 1 befestigten Teil 22 angeordnet, der z.B. mittels eines Zapfens 22a an der Stirnseite des Bildschachtes 1b gelagert sein kann. Seine Außenform ist schalenartig der Innenform der den Meniskus 6 tragenden Schale 11 angepaßt. Der Teil 22 samt Linse 5 könnte einstückig aus durchsichtigem Kunststoff hergestellt sein und außerhalb der Linse 5 eine Färbung haben, die eine einer Objektivfassung ähnliche Wirkung hervorruft.

Drehbare Betätigungshandhaben, wie die Filmtransporthandhabe 8, die am Kerngehäuse 1 drehbar gelagert und mit einer Filmaufwickelspule verbunden ist, können naturgemäß durch das Schutzgehäuse 11, 12 nicht völlig eingeschlossen sein. Eine sinnvolle Anordnung hierfür ist in Fig. 5 gezeigt. Dabei weist die Schale 12 einen Schlitz auf, durch den die drehbare Filmtransporthandhabe 8 teilweise nach außen ragt, wie auch in den Fig. 2 und 3 sichtbar ist. Damit der Filmpack trotzdem in der geforderten Weise voll geschützt ist, sind zu beiden Seiten des Schlitzes elastische Dichtungslippen 23, 24 an den Schlitzkanten gelagert, die mit einem U-ähnlichen Profil 23a, 24a die Schlitzkanten übergreifen. Ihre an den Flachseiten der Filmtransporthandhabe 8 anliegenden lippenartig auslaufenden Enden 23b, 24b laufen nach außen derart aufeinander zu, daß bei Überdruck im Filmpack, z.B. bei Erwärmung, Luft zwischen den Dichtungslipen 23, 24 und der Filmtransporthandhabe 8 entweichen kann. Der Schlitz mit den Dichtungslippen 23, 24 erfüllt also eine doppelte Aufgabe, die der Abdichtung nach innen und der Entlüftung des Inneren nach außen.

Naturgemäß sind noch andere Ausgestaltungen auf der Grundlage des Patentanspruchs zur Lösung der gestellten Aufgabe möglich. So könnten die Schalen 11, 12 verklebt oder verschweißt oder fest und mit Werkzeugen lösbar miteinander verrastet sein, ohne daß der Streifen 13 über den Fugen liegt, vgl. Fig. 9. An allen Stellen, an denen durch Druck zu betätigende Handhaben liegen, könnten die Schalen trotzdem Ausnehmungen aufweisen. Diese Ausnehmungen sind dann durch elastische Plaketten überklebt und somit abgedichtet. Zur Anpassung an den jeweiligen Geschmack können die Schalen 11, 12 des Schutzgehäuses an ihrer Innen- oder Außenseite außerhalb optischer Strahlengänge bedruckt sein oder innen mit bedruckter Folie oder dergleichen hinterlegt sein. Es liegt auch im Rahmen der Erfindung, die Schalen mehrfarbig zu spritzen, insbesondere die optischen Teile aus durchsichtigem Kunststoff und die übrigen Schalenbereiche aus undurchsichtigem Kunststoff. Schließlich können gegebenenfalls die Schalen auch anders gestaltet und aneinander angepaßt sein, so daß ihre Trennebene beispielsweise parallel zur Ober- oder Unterseite des Filmpacks verläuft.

In einer weiteren Ausgestaltung der Erfindung ist das Schutzgehäuse an der Stelle der Aufnahmelinse geöffnet, so daß das Licht direkt auf die Aufnahmelinse fällt und nicht erst das an dieser Stelle transparente Schutzgehäuse passieren muß. Linse und Schutzgehäuse sind gegeneinander durch eine geeignete Dichtung abgedichtet, so daß auch in diesem Fall kein Schmutz an das Kerngehäuse dringen kann.

Bei der Wiederverwendung des Kerngehäuses muß gegebenenfalls die Linse ausgetauscht werden.

## Patentansprüche

1. Fotografischer Rollfilmpack, bestehend aus einem lichtdichten Kerngehäuse (1, 2) mit Rollfilm, einem fotografischen Verschluß, Filmtransportmitteln mit Bedienungshandhabe (8), einem Bildzählwerk, einer Verschlußauslösevorrichtung und optische Strahlengänge definierenden Ausschnitten und/oder Linsen eines Aufnahmeobjektivs (5, 6) und/oder Suchers, mit einer Umhüllung (11, 12) für das Kerngehäuse(1, 2), die mindestens eine Betätigungshandhabe (9) freigibt, wobei die Umhüllung (11, 12) durch ein aus Schalen (11, 12) aus wenigstens im Bereich der optische Strahlengänge definierenden Ausschnitte und/oder Linsen eines Aufnahmeobjektivs (5, 6) und/oder Suchers durchsichtigem, im wesentlichen starrem Kunststoff zusammengesetztes, das Kerngehäuse (1, 2) umschließendes Schutzgehäuse gebildet wird, dadurch gekennzeichnet, daß die Schalen (11, 12) durch einen über benachbarten Schalenkanten angeordneten Streifen (13) aus biegsamem, elastischem Kunststoff zusammengehalten sind.

2. Rollfilmpack nach Anspruch 1, dadurch gekennzeichnet, daß der Streifen (13) über mindestens einer Betätigungshandhabe (9, 14) liegt und diese durch den elastischen Streifen hindurch betätigbar ist.

3. Rollfilmpack nach den Ansprüchen 1 oder 2, dadurch gekennzeichnet, daß der elastische Streifen (13) an Betätigungsstellen (9, 14) Markierungen (15, 16) für erstere aufweist.

4. Rollfilmpack nach mindestens einem der vorhergehenden Ansprüche, dadurch gekennzeichnet, daß freie Enden des elastischen Streifens (13) unterhalb einer der aufgesetzten Markierungen (15) aneinander stoßen und miteinander verbunden sind.

5. Rollfilmpack nach mindestens einem der vorhergehenden Ansprüche, dadurch gekennzeichnet, daß der elastische Streifen (13) mit den Schalen (11, 12) verklebt ist.

6. Rollfilmpack nach mindestens einem der vorhergehenden Ansprüche, dadurch gekennzeichnet, daß der elastische Streifen (13) als endloses, flaches, gummiringähnliches Teil ausgebildet und über die benachbarten Schalenkanten gezogen ist und infolge seiner Elastizität straff auf den Schalen (11, 12) sitzt.

7. Rollfilmpack nach mindestens einem der vorhergehenden Ansprüche, dadurch gekennzeichnet, daß wenigstens eine der Schalen (11, 12) oberhalb einer Betätigungshandhabe im Kerngehäuse (1) und unterhalb des elastischen Streifens (13) als elastisch federnder Arm (11c) mit Betätigungsfläche (14) ausgebildet ist.

8. Rollfilmpack nach mindestens einem der vorhergehenden Ansprüche, dadurch gekennzeichnet, daß wenigstens eine der Schalen (11, 12) an der Stelle einer Betätigungshandhabe (9) im Kerngehäuse (1) und unterhalb des elastischen Streifens (13) eine Ausnehmung (17) aufweist, durch die die Betätigungshandhabe (9) millels des elastischen Streifens (13) bedienbar ist.

9. Rollfilmpack nach mindestens einem der vorhergehenden Ansprüche, dadurch gekennzeichnet, daß das Schutzgehäuse (11, 12) an wenigstens einer einem optischen Strahlengang des Kerngehäuses (1, 2) zugeordneten Stelle (6) eine optisch wirksame Ausgestaltung hat.

10. Rollfilmpack nach Anspruch 9, dadurch gekennzeichnet, daß die optisch wirksame Ausgestaltung ein Objektivlinsenteil (6), ein Sucherlinsenteil (19), eine Lupe (20) z.B. einer Bildzahlanzeige (10) oder eine Streuscheibe (25) für ein in das Kerngehäuse (1) eingebautes elektronisches Blitzgerät ist.

11. Rollfilmpack nach Anspruch 10, dadurch gekennzeichnet, daß das Objektivlinsenteil (6) ein Meniskus ist, der zusammen mit einer im Kerngehäuse (1) gelagerten weiteren Linse (5) das Aufnahmeobjektiv bildet.

12. Rollfilmpack nach Anspruch 11, dadurch gekennzeichnet, daß die weitere Linse (5) an einem am Kerngehäuse (1) gelagerten, der Innenform der das Objektivlinsenteil (6) aufweisenden Schale (11) angepaßten schalenartigen Teil (22) angeordnet ist.

13. Rollfilmpack nach mindestens einem der vorhergehenden Ansprüche, dadurch gekennzeichnet, daß für jede dreh- oder verschiebbare Betätigungshandhabe (8) des Kerngehäuses (1) ein zugeordneter Schlitz in der zugeordneten Schale (11) des Schutzgehäuses (11, 12) angeordnet ist und Dichtungslippen (23, 24) die Schlitzkanten gegen die dreh- oder verschiebbare Betätigungshandhabe (8) hin abdichten.

14. Rollfilmpack nach Anspruch 13, dadurch gekennzeichnet, daß die Dichtungslippen (23, 24) gegen die Betätigungshandhabe (8) hin nach außen weisen.

15. Rollfilmpack nach Anspruch 1, dadurch gekennzeichnet, daß die Schalen (11, 12) an durch Drücken bedienbaren Betätigungshandhaben (9, 14) Ausnehmungen (17, 18) aufweisen, die durch Papier- oder Kunststoffplaketten abgedeckt oder überklebt sind.

16. Rollfilmpack nach einem der vorhergehenden Ansprüche, dadurch gekennzeichnet, daß die Schalen (11, 12) des Schutzgehäuses an Stellen außerhalb optischer Strahlengänge mit bedrucktem, dünnem Karton, Papier oder Kunststoff unterlegt oder an ihrer Innen- oder Außenseite bedruckt sind.

17. Rollfilmpack nach Anspruch 1, dadurch gekennzeichnet, daß das Schutzgehäuse an der Stelle der Aufnahmelinse geöffnet und die Öffnung gegen die Aufnahmelinse abgedichtet ist.

## Claims

1. Photographic roll-film pack comprising a light-proof core case (1,2) with roll-film, a photographic shutter, film advance means with manual control (8), a picture counter, a shutter-release device and apertures and/or lenses of a picture-taking lens (5,6) and/or viewfinder defining optical beam paths, with a covering (11,12) for the core case (1,2) which leaves uncovered at least one manual control means (9), wherein the covering (11, 12) is formed by a protective case enclosing the core case (1,2), which protective case is composed of shells (11, 12) of essentially rigid plastics which are at least transparent in the areas of apertures and/or lenses of a picture-taking lens (5,6) and/or viewfinder defining optical beam paths, characterized in that the shells (11,12) are held together by a strip (13) of flexible, elastic material, disposed over adjoining shell edges.

2. Roll-film pack according to Claim 1, characterized in that the strip (13) lies over at least one manual control means (9,14) and that these can be operated through the elastic strip.

3. Roll-film pack according to Claims 1 or 2, characterized in that the elastic strip (13) possesses markings (15,16) at the manual control positions (9,14) indicating the latter.

4. Roll-film pack according to any one of the preceding Claims, characterized in that free ends of the elastic strip (13) meet and are jointed together below one of the superimposed markings (15).

5. Roll-film pack according to any one of the preceding Claims, characterized in that the elastic strip (13) is stuck to the shells (11, 12).

6. Roll-film pack according to any one of the preceding Claims, characterized in that the elastic strip (13) is formed as a continuous, flat part similar to a rubber band and drawn over the adjoining shell edges and, due to its elasticity, sits tightly on the shells (11, 12).

7. Roll-film pack according to any one of the preceding Claims, characterized in that at least one of the shells (11, 12) is formed above a manual control means in the core case (1) and below the elastic strip (13) as an elastic resilient arm (11c) with an actuating surface (14).

8. Roll-film pack according to any one of the preceding Claims, characterized in that at least one of the shells (11, 12) possesses a recess (17) at the position of a manual control means (9) in the core case (1) and below the elastic strip (13), through which the manual control means(9) can be operated by means of the elastic strip (13).

9. Roll-film pack according to any one of the preceding Claims, characterized in that the protective case (11, 12) forms an optically effective part at at least one position (6) corresponding with an optical beam path of the core case (1, 2).

10. Roll-film pack according to Claim 9, characterized in that the optically effective part is an picture-taking lens part (6), a viewfinder lens part (19), a magnifier (20), e.g. of a picture number display (10) or a diffuser (25) for an electronic flash unit built into the core case (1).

11. Roll-film pack according to Claim 10, characterized in that the picture-taking lens part (6) is a meniscus which, together with an additional lens (5) mounted in the core case (1), forms the picture-taking lens.

12. Roll-film pack according to Claim 11, characterized in that the additional lens (5) is arranged on a shell-type part (22) mounted on the core case (1), which matches the internal form of the shell (11) comprising the picture-taking lens part (6).

13. Roll-film pack according to any one of the preceding Claims, characterized in that for each rotatable or movable manual control means(8) of the core case (1) there is disposed a corresponding slot in the corresponding shell (11) of the protective case (11, 12) and that sealing lips (23, 24) seal the edges of the slot against the rotatable or movable manual control means (8).

14. Roll-film pack according to Claim 13, characterized in that the sealing lips (23, 24) taper outwards, towards the manual control means (8).

15. Roll-film pack according to Claim 1, characterized in that the shells (11, 12) have recesses (17, 18) at pressure-operated manual control means (9, 14) which are covered or pasted over with paper or plastic plaquettes.

16. Roll-film pack according to any one of the preceding Claims, characterized in that at positions outside optical beam paths the shells (11, 12) of the protective case are lined with printed thin cardboard, paper or plastics or are printed on the inside or outside.

17. Roll-film pack according to Claim 1, characterized in that the protective case is open at the position of the picture-taking lens and that the opening is sealed against the picture-taking lens.

## Revendications

1. Film-pack pour film photographique en bobine constitué par un boîtier central (1, 2) étanche à la lumière comprenant une pellicule en bobine, par un obturateur photographique, par des moyens de transport de pellicule munis d'une poignée de manutention (8), par un mécanisme de comptage des photos, par un dispositif de déclenchement de l'obturateur et par des encoches définissant des voies de faisceaux optiques et/ou des lentilles d'un objectif de prise de vue (5, 6) et/ou d'un viseur, par une enveloppe (11, 12) pour le boîtier central (1, 2), qui libère au moins une poignée de manipulation (9), dans lequel l'enveloppe (11, 12) est formée par un boîtier de protection entourant le boîtier central (1, 2), composé par des coquilles (11, 12) constituées par une matière synthétique essentiellement rigide, transparente au moins dans la zone des encoches définissant des voies de faisceaux optiques et/ou des lentilles d'un objectif de prise de vue (5, 6) et/ou d'un viseur, caractérisé en ce que les coquilles (11, 12) sont maintenues ensemble par une bande (13) disposée pardessus des arêtes de coquilles adjacentes, constituée d'une matière synthétique élastique flexible.

2. Film-pack pour film en bobine selon la revendication 1, caractérisé en ce que la bande (13) est disposée par-dessus au moins une poignée de manutention (9, 14), celle-ci pouvant être manipulée à travers la bande élastique.

3. Film-pack pour film en bobine selon la revendication 1 ou 2, caractérisé en ce que la bande élastique (13) présente, à des endroits de manutention (9, 14), des repères (15, 16) pour la première citée.

4. Film-pack pour film en bobine selon au moins une des revendications précédentes, caractérisé en ce que les extrémités libres de la bande élastique (13) viennent buter l'une contre l'autre et sont reliées l'une à l'autre en dessous d'un des repères (15) superposés.

5. Film-pack pour film en bobine selon au moins une des revendications précédentes, caractérisé en ce que la bande élastique (13) est collée avec les coquilles (11, 12).

6. Film-pack pour film en bobine selon au moins une des revendications précédentes, caractérisé en ce que la bande élastique (13) est réalisée sous la forme d'un élément analogue à un anneau en caoutchouc, plat, sans fin et est tirée par-dessus les arêtes adjacentes des coquilles pour venir ensuite se disposer grâce à son élasticité de manière tendue sur les coquilles (11, 12).

7. Film-pack pour film en bobine selon au moins une des revendications précédentes, caractérisé en ce qu'au moins une des coquilles (11, 12) est réalisée au-dessus d'une poignée de manutention dans le boîtier central (1) et en dessous de la bande élastique (13) sous la forme d'un bras à ressort élastique (11c) muni d'une surface de manutention (14).

8. Film-pack pour film en bobine selon au moins une des revendications précédentes, caractérisé en ce qu'au moins une des coquilles (11, 12) présente, à l'endroit d'une poignée de manutention (9) dans le boîtier central (1) et en dessous de la bande élastique (13), un évidement (17) à travers lequel la poignée de manutention (9) peut être manipulée à l'aide de la bande élastique (13).

9. Film-pack pour film en bobine selon l'une quelconque des revendications précédentes, caractérisé en ce que le logement de protection (11, 12) possède, à au moins un endroit (6) attribué à une voie de faisceaux optiques du boîtier central (1, 2), une forme de réalisation optiquement active.

10. Film-pack pour film en bobine selon la revendication 9, caractérisé en ce que la forme de réalisation optiquement active est un élément de lentille d'objectif (6), un élément de lentille de viseur (19), une loupe (20), par exemple d'un mécanisme de comptage de photos (10) ou encore un diffuseur (25) pour un dispositif électronique pour flash intégré dans le boîtier central (1).

11. Film-pack pour film en bobine selon la revendication 10, caractérisé en ce que l'élément de lentille d'objectif (6) est un ménisque qui forme, de manière conjointe avec une autre lentille (5) montée dans le boîtier central (1), l'objectif de prise de vue.

12. Film-pack pour film en bobine selon la revendication 11, caractérisé en ce que la lentille supplémentaire (5) est disposée sur une partie (22) en forme de coquille dont la forme épouse la forme interne de la coquille (11) présentant l'élément de lentille d'objectif (6), montée sur le boîtier central (1).

13. Film-pack pour film en bobine selon au moins une des revendications précédentes, caractérisé en ce que, pour chaque poignée de manutention (8) du boîtier central (1), rotative ou déplaçable, est disposée une fente correspondante dans la coquille correspondante (11) du boîtier de protection (11, 12), des lèvres d'étanchéité (23, 24) conférant aux arêtes de la fente une étanchéité par rapport à la poignée de manutention (8) rotative ou déplaçable.

14. Film-pack pour film en bobine selon la revendication 13, caractérisé en ce que les lèvres d'étanchéité (23, 24) sont orientées vers l'extérieur par rapport à la poignée de manutention (8).

15. Film-pack pour film en bobine selon la revendication 1, caractérisé en ce que les coquilles (11, 12) présentent des évidements (17, 18) sur des poignées de manutention (9, 14) aptes à être manipulées par pression, qui sont recouverts ou contrecollés avec du papier ou des plaquettes en matière synthétique.

16. Film-pack pour film en bobine selon l'une quelconque des revendications précédentes, caractérisé en ce que les coquilles (11, 12) du boîtier de protection sont doublées à certains endroits à l'extérieur des voies de faisceaux optiques avec du carton, du papier ou une matière synthétique mince imprimé ou sont imprimées sur leur côté interne ou sur leur côté externe.

17. Film-pack pour film en bobine selon la revendication 1, caractérisé en ce que le boîtier de protection est ouvert à l'endroit des lentilles de prise de vue, l'ouverture étant rendue étanche par rapport à la lentille de prise de vue.
